# EUROPÄISCHE PATENTANMELDUNG

(11) **EP 1 884 157 A1**
(43) Veröffentlichungstag der Anmeldung: **06.02.2008**
(21) Anmeldenummer: 07013851.6
(22) Anmeldetag: 14.07.2007
(51) Int. Cl.: A01G 25/02

(54) **Bewässerungsvorrichtung**

(30) Priorität: 03.08.2006 DE 102006036260
(71) Anmelder: GARDENA Manufacturing GmbH, 89079 Ulm (DE)
(72) Erfinder: Schiedt, Christoph, 88483 Burgrieden (DE)

(57) **Zusammenfassung**

Für eine Bewässerungsvorrichtung nach Art eines Tropfers zur kontinuierlichen Wasserabgabe bei geringen Durchflussraten wird die vom Benutzer manuell veränderlich einstellbare Durchflussrate vorgeschlagen.

## Beschreibung

Die Erfindung betrifft eine Bewässerungsvorrichtung zur dosierten Abgabe von Wasser nach Art eines Tropfers.

Bewässerungsvorrichtungen zur dosierten Abgabe von Wasser an Pflanzen sind z.B. als sogenannte Tropfer bekannt, welche kontinuierlich Wasser mit sehr kleiner Durchflussrate abgeben, wobei sich bei über dem Boden liegender Austrittsöffnung einzelne Tropfen bilden. Solche Tropfer weisen typischerweise einen in Zick-Zack-Form verlaufenden Dosierkanal auf, dessen durch Querschnitt, Länge und Umlenkungen festgelegter Querschnitt maßgeblich die Durchflussrate bestimmt. Bei solchen Tropfern ist zusätzlich bekannt, Druckschwankungen in einer zuführenden Leitung zumindest teilweise zu kompensieren, indem eine flexible Membran zwischen einer Eingangskammer und einer Ausgangskammer angeordnet ist. Ein solcher Tropfer ist beispielsweise aus der DE000069103704T2 bekannt. Aus der DE000002807434A1 ist ein Tropferelement bekannt, bei welchem der Dosierkanal eine Gewindeform aufweist und durch die Einschraubtiefe der Strömungswiderstand einstellbar ist. Die Konstruktion erlaubt aber keine Kompensation von Schwankungen des Eingangsdrucks.

Der vorliegenden Erfindung liegt die Aufgabe zugrunde, eine Bewässerungsvorrichtung nach Art solcher Tropfer weiter zu verbessern. Die Erfindung ist im unabhängigen Anspruch beschrieben. Die abhängigen Ansprüche enthalten vorteilhafte Ausgestaltungen und Weiterbildungen der Erfindung.

Die Erfindung ermöglicht mit einfachen Mitteln eine Variation der Durchflussrate über einen weiten Bereich. Durch die veränderliche Positionierbarkeit der Öffnung ist der wirksame Strömungswiderstand des Dosierkanals zwischen Eintrittsöffnung und Austrittsöffnung veränderlich einstellbar und damit auch die durch diesen Strömungswiderstand maßgeblich mitbestimmte Durchflussrate durch den Benutzer wählbar.

Vorzugsweise ist lediglich eine Öffnung, also nur Einlassöffnung oder nur Auslassöffnung des Dosierkanals veränderlich positionierbar, so dass die für den Strömungswiderstand des Dosierkanals zwischen Einlassöffnung und Auslassöffnung wirksame Länge des Dosierkanals veränderbar ist. Die Größe der positionsveränderlichen Öffnung kann bei der Positionsveränderung vorzugsweise gleich groß bleiben, wobei die Flächenüberdeckung mit dem Dosierkanal durch dessen z.B. mäanderförmigen Verlauf in geringem Maße variieren kann, im wesentlichen aber gleich groß bleibt. In anderer vorteilhafter Ausführungsform kann die Größe der Öffnung veränderlich sein, insbesondere indem bei der Positionsveränderung einseitig eine Verschiebung der Begrenzung der Öffnung erfolgt,

Der Dosierkanal weist in seiner Längserstreckung vorteilhafterweise in an sich bekannter Art eine mehrfach umgelenkte Kanalstruktur als dem Längsverlauf überlagerte Struktur auf, insbesondere einen mäanderförmigen oder einen zick-zack-förmigen Verlauf auf, deren Umlenkungen den Strömungswiderstand erhöhend wirken. In besonders vorteilhafter Ausführung kann der Querschnitt des Strömungskanals im Verlauf seiner Längserstreckung in Strömungsrichtung zunehmen, wobei die Zunahme vorzugsweise im wesentlichen gleichmäßig über die Längserstreckung verteilt erfolgt.

Die Längserstreckung des Kanals erfolgt vorteilhaft gekrümmt, insbesondere spiralförmig, wendelförmig oder kreisförmig. Der Kanal kann insbesondere als Vertiefung in einer Zylinderfläche oder vorzugsweise in einer ebenen Fläche, insbesondere einer Kreisfläche oder Kreisringfläche ausgeführt sein.

Vorzugsweise ist eine den Dosierkanal begrenzende Wand durch eine Wandfläche eines relativ zu dem Dosierkanal verlagerbaren Elements gebildet und die relativ zu dem Dosierkanal positionsveränderliche Öffnung als Aussparung, welche mit einem Eingang der Vorrichtung wasserführend in Verbindung steht, in einer solchen Wandfläche gebildet und damit gleichfalls relativ zu dem Dosierkanal verlagerbar. Die Wandfläche kann eben und/oder bevorzugt drehsymmetrisch, z.B. als Teil einer Kreiskegelfläche, einer Kreiszylinderfläche oder vorzugsweise einer Kreisringfläche, ausgeführt sein. Die Öffnung ist dabei entlang des langgestreckten Dosierkanals relativ zu diesem verlagerbar und steht vorteilhafterweise im wesentlichen ständig in Überdeckung mit dem Dosierkanal, wobei zusätzlich eine Position der Öffnung vorgesehen sein kann, in welcher die Öffnung nicht mit dem Dosierkanal in Überdeckung steht und der Wasserdurchfluss vollständig gesperrt ist.

Vorteilhafterweise ist ein vom Benutzer vorzugsweise manuell relativ zu einem Grundkörper verdrehbares Stellelement vorgesehen. Die Kanalstruktur kann in einer ersten Ausführung relativ zu dem Grundkörper feststehend und die positionsveränderliche Öffnung relativ zum Grundkörper verdrehbar sein.

In anderer vorteilhafter Ausführung ist die Kanalstruktur,an dem verdrehbaren Stellelement und die relativ zum Dosierkanal positionsveränderliche Öffnung bezüglich des Grundkörpers feststehend ausgebildet.

In bevorzugter Ausführungsform liegt eine Begrenzungsfläche zwischen dem Dosierkanal und einer diesen einseitig abschließenden und relativ zu diesem verlagerbaren Wandfläche auf einer Seite des verdrehbaren Stellelements, welche einer stromaufwärts gelegenen, insbesondere einer von dem Eingangswasserdruck oder dem Druck in einer Eingangskammer beaufschlagten Seite des Stellelements abgewandt ist.

Vorteilhafterweise ist das Stellelement um eine Drehachse relativ zu einem Grundkörper, in welchem eine Kanalstruktur des Dosierkanals ausgebildet ist, drehbar, wobei insbesondere eine zur Drehachse drehsymmetrisch ausgebildete Wandfläche des Stellelements eine Wand des Dosierkanals bilden kann oder der Dosierkanal als Vertiefung gegen eine erste ebene Fläche und die Öffnung in einer auf der ersten ebenen Fläche gleitend verschiebbaren zweiten ebenen Fläche ausgebildet ist.

Die Erfindung ist nachfolgend anhand bevorzugter Ausführungsbeispiele unter Bezugnahme auf die Abbildungen noch eingehend veranschaulicht. Dabei zeigt
- Fig. 1: ein Schnittbild durch einen prinzipiellen Aufbau einer erfindungsgemäßen Bewässerungsvorrichtung
- Fig. 2: eine Schrägansicht einer Bewässerungsvorrichtung
- Fig. 3: den Grundkörper zu Fig. 2
- Fig. 4: einen Schnitt durch den Grundkörper nach Fig. 3
- Fig. 5: eine weitere Ausführungsform
- Fig. 6: eine bevorzugte Ausführungsform in geschnittener Darstellung
- Fig. 7: ein Stellelement aus der Vorrichtung nach Anspruch 6 mit der Kanalstruktur

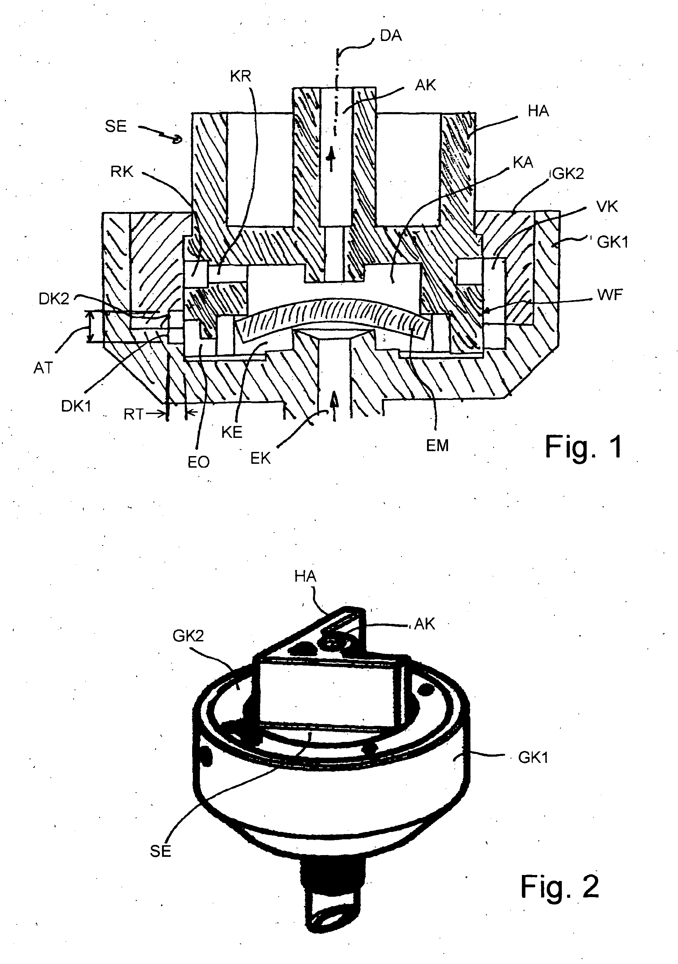

Aus Fig. 1 ist der prinzipielle Aufbau einer ersten Ausführung eines erfindungsgemäßen. Tropfers mit Druckkompensation ersichtlich.

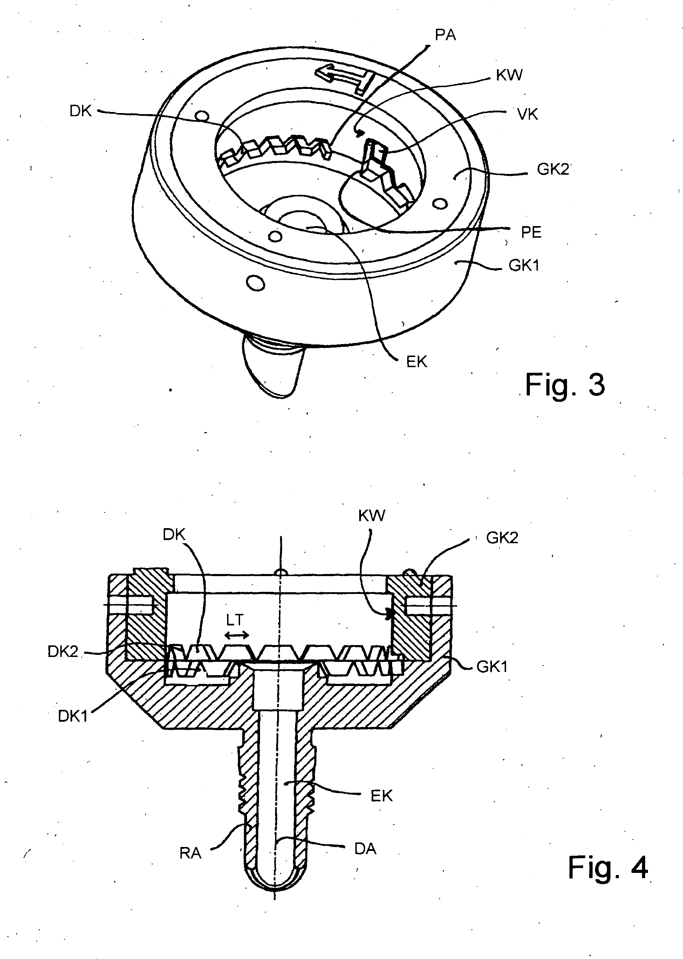

Ein Grundkörper ist aus einem ersten Teilkörper GK1 und einem zweiten Teilkörper GK2 zusammengesetzt und bildet eine bezüglich einer Drehachse DA annähernd kreiszylindrische Aufnahme für einen Einsatzkörper. Eine um die Drehachse DA kreiszylindrische Innenwand KW des Grundkörpers weist der Aufnahme zu. Erste Aussparungen DK1 in dem von erstem Teilkörper GK1 gebildeten Teil der Innenwand KW und zweite Aussparungen DK2 in dem vom zweiten Teilkörper GK2 gebildeten Teil der Innenwand KW stehen sich an der Grenzfläche der beiden Teilkörper axial bezüglich der Drehachse gegenüber und bilden gemeinsam eine Kanalstruktur eines Dosierkanals, welcher sich von einem ersten eingangsseitigen Ende PA zu einem zweiten ausgangsseitigen Ende PE über einen Winkel von vorteilhafterweise wenigstens 120°, vorzugsweise wenigstens 180°, insbesondere wenigstens 240° um die Drehachse entlang der Innenwand KW erstreckt. In den Abbildungen nach Fig. 3 und Fig. 4 mit dem Grundkörper ohne Einsatzkörper ist der Dosierkanal zur Aufnahme hin, also radial bezüglich der Drehachse DA offen.

Die ersten und zweiten Aussparungen DK1, DK2 sind im skizzierten vorteilhaften Ausführungsbeispiel als einander zugewandte Zahnstrukturen mit in Umfangsrichtung beabstandeten Zähnen ausgeführt, wobei sich jeweils Zahnspitzen der einen und Zahnlücken der anderen Aussparungen axial gegenüberstehen und einen in Umfangsrichtung langgestreckten mäanderförmig oder zick-zack-förmig verlaufenden Dosierkanal begrenzen, welcher auch als Labyrinth bezeichnet wird. Die in Fig. 3 und Fig. 4 offene Seite des Dosierkanals wird durch eine um die Drehachse kreiszylindrische Wandfläche WF eines in die Aufnahme eingesetzten Einsatzkörpers, welcher relativ zum Grundkörper um die Drehachse DA drehbar ist und ein Stellelement SE zur Veränderung der Durchflussrate bildet, abgeschlossen. Das Stellelement und damit dessen Wandfläche WF sind relativ zu der Kanalstruktur des Dosierkanals im Grundkörper um die Drehachse drehbar.

Grundsätzlich kann in Umkehr der skizzierten Anordnung auch der Grundkörper mit der Kanalstruktur radial innenliegend und das Stellelement, radial außenliegend angeordnet sein.

Der Querschnitt des Dosierkanals kann vorteilhafterweise in Umfangsrichtung von einem Anfang PA der Kanalstruktur zu einem Ende PE der Kanalstruktur hin zunehmen, insbesondere durch Zunahme der radialen Tiefe RT und axialen Tiefe AT und/oder der Umfangslänge LT der Zahnlücken. Die Zunahme des Kanalquerschnitts ist von besonderem Vorteil zur Vermeidung des Verstopfens des Dosierkanals und für einen-großen Verstellbereich der Durchflussrate.

Das Stellelement dichtet mit seiner um die Drehachse kreiszylindrischen Wandfläche WF den Dosierkanal radial nach innen ab. Eine Einlassöffnung EO in der Wandfläche WF des Stellelements liegt axial auf Höhe des Dosierkanals. Je nach Drehstellung des Stellelements um die Drehachse DA relativ zur Kanalstruktur im Grundkörper mündet die Einlassöffnung an verschiedenen Positionen entlang des Dosierkanals in diesen.

Das Ende PE der Kanalstruktur ist axial durch einen Abschnitt VK fortgesetzt, welche zu einer Auslassöffnung führt. Die Auslassöffnung ist im Stellelement SE durch einen Ringkanal RK und einen radialen Kanalabschnitt KR gebildet. Der Ringkanal erstreckt sich in Umfangsrichtung wenigstens so weit, dass in jeder zulässigen Drehstellung des Stellelements eine Überdeckung des Ringskanals RK mit dem Fortsatz VK gegeben und der Strömungsweg durch die Auslassöffnung frei ist. Der Ringkanal RK kann auch ganz oder teilweise in dem Grundkörper ausgebildet sein oder durch gleichwirkende andere Strukturen realisiert sein.

Je nach Drehstellung des Stellelements SE um die Drehachse DA ergibt sich eine andere durchströmte Länge des Dosierkanals und damit ein anderer Strömungswiderstand und eine andere Durchflussrate. Anstelle der Positionsveränderung der Einlassöffnung EO kann auch eine Positionsveränderung der Auslassöffnung entlang der Längserstreckung des Dosierkanals in Umfangsrichtung oder eine kombinierte Relativverlagerung von Auslassöffnung und Einlassöffnung bezüglich des Dosierkanals vorgesehen sein.

In aus druckkompensierten Tropfern an sich bekannter Weise ist vorteilhaft axial zwischen Grundkörper und Stellelement eine Kammer ausgebildet, welche durch eine flexible, insbesondere gummielastische Membran EM in eine Eingangskammer KE und eine Ausgangskammer KA unterteilt ist. Die Membran ist entlang ihres Außenrandes axial abgestützt und wölbt sich unter dem Eingangsdruck zuströmenden Wassers aus der Zuleitung von der Einmündung des Eingangskanals EK weg, wobei bei höherem Eingangsdruck mit stärkerer Aufwölbung der Membran gleichzeitig der Strömungsquerschnitt für die radiale Strömung von Wasser aus der Ausgangskammer KA in den Ausgangskanal AK verringert und damit ein höherer Eingangsdruck automatisch einen höheren Gesamtströmungswiderstand bewirkt, woraus sich eine geringere Abhängigkeit der Durchflussrate vom Eingangsdruck ergibt als ohne eine solche Membran.

Bei Verzicht auf die Druckkompensation ergibt sich eine konstruktive Vereinfachung der Vorrichtung.

Grundkörper und Stellelement sind vorteilhafterweise als Kunststoff-Spritzgussteile hergestellt. Das Stellelement kann vorteilhafterweise durch einen die Aufnahme im Grundkörper radial geringfügig überragenden Kragen AS an einer Stufe ES des Stellelements axial gehalten sein und unter elastischer Aufweitung des Grundkörpers im Bereich des Kragens in diesen einschnappbar sein. An dem Stellelement ist eine Handhabe HA zur manuellen werkzeuglosen Drehung des Stellelements relativ zum Grundkörper angeformt. An Grundkörper und/oder am Stellelement können Zeigerelemente ZE vorgesehen sein, aus welchen die eingestellt Drehstellung durch den Benutzer ersichtlich ist.

Der Eingangskanal EK kann in bekannter Weise in einem Anschlussstutzen verlaufen, welcher in einem Kunststoffrohr oder einem Schlauch befestigbar ist.

Im Betrieb der skizzierten Vorrichtung strömt Wasser unter Druck aus einer nicht mit eingezeichneten Zuleitung durch den Eingangskanal EK in die Eingängskammer KE, wobei die Membran EM von der Einmündung des Eingangskanals in die Eingangskammer weg gewölbt wird. Von der Eingangskammer strömt das Wasser über die Einlassöffnung EO in den Dosierkanal und in diesem in Umfangsrichtung um die Drehachse DA zum Ende des Dosierkanals und über den Fortsatz VK und die durch Ringkanal RK und radialen Kanal KR gebildete Auslassöffnung in die Ausgangskammer KA und von dieser durch den Ausgangskanal AK nach außen.

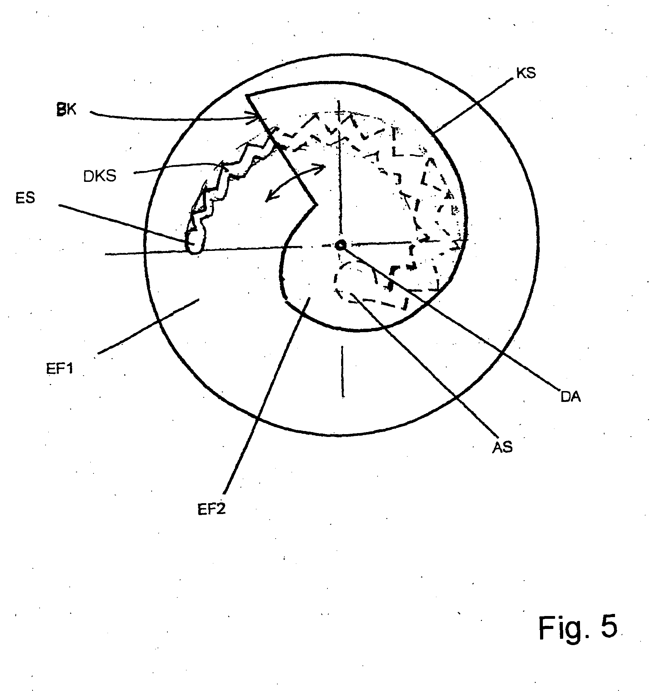

In Fig. 5 ist eine weitere vorteilhafte Ausführung skizziert, bei welcher der Dosierkanal als langgestreckte Kanalstruktur DKS mit einer Vielzahl von Umlenkungen als Vertiefung in einer ersten ebenen Fläche EF1 ausgebildet und in seiner Längserstreckung einer Spirale über ca. 270° um die Drehachse DA angenähert verläuft. Die Kanalstruktur DKS ist in Richtung der Drehachse nach einer Seite offen. Eine zweite ebene Fläche EF2 eines um die Drehachse drehbaren Stellglieds liebt an der ersten ebenen Fläche EF1 an und dichtet den Dosierkanal in Richtung der Drehachse in einem Bereich, in welchem die zweite Fläche die Kanalstruktur überdeckt, ab. In dem Überdeckungsbereich ist die Kanalstruktur mit unterbrochener Linie gezeichnet. Die zweite Fläche ist dem spiralförmigen Verlauf des Dosierkanals um die Drehachse in der Art angepasst, dass eine Außenkontur KS der zweiten ebenen Fläche EF2 gleichfalls einen spiralförmigen Verlauf um die Drehachse aufweist sowie eine quer zur Längserstreckung der Kanalstruktur verlaufende, insbesondere im wesentlichen radiale Kante BK. Durch Drehen des Stellglieds wird ausgehend von einer Einlassöffnung ES des Dosierkanals ein mehr oder weniger großer Bereich des Kanals freigegeben, und der den Strömungswiderstand des Dosierkanals bestimmende abgedeckte Bereich variiert. Wenn sich die Kanalstruktur um maximal 180° um die Drehachse erstreckt, kann auf die spiralige Form des Dosierkanalverlaufs und der Außenkante KS verzichtet werden.

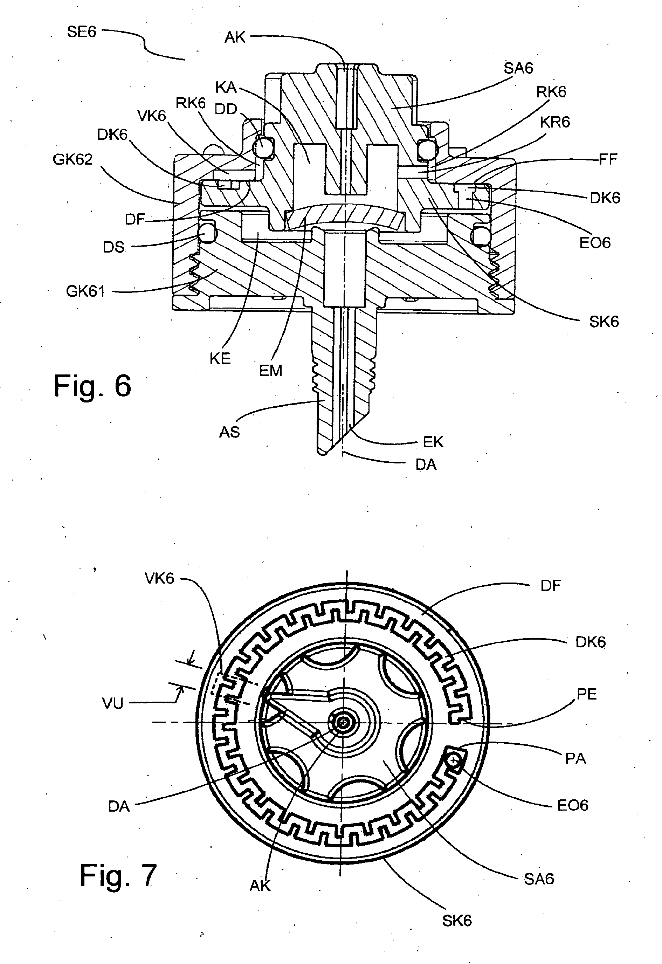

Fig. 6 zeigt eine bevorzugte Ausführungsform eines Tropfers in zu Fig. 1 analoger Schnittdarstellung. Der Tropfer enthält in einem zweiteiligen Grundkörper GK61, GK62 ein relativ zu diesem um eine Drehachse DA manuell verdrehbares Stellelement SE6. In weiterer Übereinstimmung mit der Ausführungsform nach Fig. 1 ist ein Eintrittskanal EK in einem Anschlussstutzen AS des Teilkörpers GK61 ausgebildet, welcher an der flexiblen Membran EM vorbei in eine, Eingangskammer EK führt. Ein Ausgangskanal AK in dem verdrehbaren Stellelement SE6 mündet in die Ausgangskammer KA.

Die Teilkörper GK61 und GK62 sind im skizzierten Beispiel miteinander verschraubt und über eine Ringdichtung DS gegeneinander abgedichtet. Die beiden Teilkörper können auch auf andere Weise miteinander verbunden, z.B. verklebt oder verschweißt sein. Eine weitere Ringdichtung DD ist zwischen den Teilkörper GK62 des Grundkörpers und das relativ zu diesem verdrehbare Stellelement, SE6 eingefügt.

Das Stellelement SE6 besitzt neben einem sich axial erstreckenden Abschnitt SA6, welcher als Handhabe zur Verdrehung des Stellelements dient und in welchem der Ausgangskanal AK6 ausgebildet ist, einen sich radial über diesen hinaus erstreckenden scheibenförmigen Abschnitt SK6, welcher mit einer Kreisringfläche DF in axialer Richtung einer Kreisringfläche FF des Teilkörpers GK62 zugewandt ist und durch Anlage an dieser eine Dichtfläche bildet. Die beiden Kreisringflächen DF, FF gleiten bei Verdrehen des Stellelements aneinander. Die Kreisringflächen sind vorzugsweise eben, können aber auch konisch verlaufen, insbesondere mit einer Mantellinienneigung von mehr als 45°, vorzugsweise mehr als 60° gegen die Drehachse.

In einer der beiden Kreisringflächen, vorzugsweise in der Fläche DF ist ein Dosierkanal DK6 als Vertiefung gegen die Kreisringsfläche ausgebildet. Fig. 7 zeigt das Stellelement allein mit axialer Blickrichtung auf die Kreisringfläche DF, woraus der einem Kreisbogen folgende Dosierkanal mit einer dem Kreisbogenverlauf überlagerten Mäanderstruktur anschaulich ersichtlich ist. Der Dosierkanal verläuft zwischen einem Anfangsbereich PA und einem Endbereich PE um die Drehachse.

Der Anfangsbereich PA des Dosierkanals DK6 ist über einen Durchbruch EO6 durch den Scheibenkörper SK6 mit der Eingangskammer EK verbunden und mit Wasser aus der Druckseite des Tropfers versorgt.

In der kreisringförmigen Gegenfläche FF des Teilkörpers KG62 ist eine Auskoppelstruktur VK6 ausgebildet, welche in Umfangsrichtung kurz ist gegenüber der Länge des bogenförmigen Verlaufs des Dosierkanals, insbesondere kleiner als eine Periodenlänge des periodischen Mäanderverlaufs des Dosierkanals. Die Erstreckung VU der Auskoppelstruktur in Umfangsrichtung ist vorzugsweise geringer als 30°, insbesondere weniger als 15° um die Drehachse DA.

Die Verbindungsstruktur VK6 überdeckt radial bezüglich der Drehachse den Dosierkanal DK6, ist radial nach außen geschlossen und mündet radial nach innen in eine das Stellelement SE6 vorteilhafterweise ringförmig umgebende Zwischenkammer RK6. In dem Stellelement SE6 ist ein radialer Kanal KR6 ausgebildet, welcher radial innen in die Ausgangskammer KA und radial außen in die Zwischenkammer RK6 mündet und diese wasserführend verbindet.

Von besonderem Vorteil bei der in Fig. 6 und Fig. 7 skizzierten Ausführungsform ist, dass die dem Dosierkanal abgewandte Fläche des Scheibenkörpers SK6 einem wenn auch gering höheren Wasserdruck ausgesetzt ist als der Dosierkanal selbst, so dass die Druckdifferenz die gegenseitige dichte Anlage der Flächen DF und FF verstärkt. Insgesamt ist das Stellelement durch die Druckdifferenz zwischen Eingangskanal und Ausgangskanal axial in Richtung einer verstärkten Flächenanlage der Flächen DF und FF gedrückt, wodurch ohne besondere weitere Maßnahmen eine gute Dichtwirkung der beim Verdrehen des Stellelements aneinander gleitenden Flächen DF und FF gegeben ist.

Im Betrieb strömt Wasser aus einer Quelle, z.B. einer Versorgungsleitung unter Druck durch den Eingangskanal unter elastischer Aufwölbung der Membran EM in die Eingangskammer KE, von dort durch den Durchbruch EO6 des Scheibenkörper SK6 in den Anfangsbereich PA des Dosierkanals DK6, durch diesen bis zu der Verbindungsstruktur VK6 und durch diese in die Zwischenkammer RK6, von dieser durch den radialen Kanal KR6 in die Ausgangskammer KA und über den Ausgangskanal AK zu der drucklosen Außenseite. Dabei bestimmt die Drehposition des Stellelements relativ zu dem zweiten Teilkörper GK62 die durchströmte und als wesentlicher Strömungswiderstand wirksame Länge des Dosierkanals DK6 zwischen dessen Anfangsbereich PA und der Verbindungsstruktur VK6. Durch Verdrehen des Stellelements kann dadurch wiederum die Durchflussrate über die Veränderung des Strömungswiderstands veränderlich eingestellt werden.

Unter Beibehaltung des Funktionsprinzips, der Vorteile und des wesentlichen Aufbaus ist die Anordnung nach Fig. 6 und Fig. 7 auf verschiedene Weise abwandelbar. Insbesondere kann der Dosierkanal auch in der feststehenden Fläche des Teilkörpers GK62 ausgebildet sein mit am Ende der Kanalstruktur angeordneter Verbindungsstruktur und zur Veränderung der wirksamen Länge des Dosierkanals wird dann z.B. bei Verdrehen des Stellelements der Durchbruch EO6 in dem Scheibenkörper SK6 entlang der Kanalstruktur und radial mit dieser überlappend verschoben. Anstelle eines Durchbruchs durch den Scheibenkörper kann dann auch eine zum Rand des Scheibenkörpers hin offene Aussparung vorgesehen sein. Die Zuleitung zu dem Dosierkanal kann auch in dem Teilkörper GK62 und die wegführende Verbindungsstruktur an dem Stellelement SE6 vorgesehen sein.

Zwischenlösungen zwischen ebenen Anlageflächen und kreiszylindrischen Anlageflächen von Kanalstruktur und Stellelement können z.B. in Form von Kegelmantelflächen gegeben sein.

Die Erfindung ist nicht auf die beschriebenen Ausführungsbeispiele beschränkt, sondern im Rahmen fachmännischen Könnens in mancherlei Weise abwandelbar.

## Patentansprüche

1. Bewässerungsvorrichtung zur dosierten Abgabe kleiner Wassermengen nach Art eines Tropfers mit einem langgestreckten Dosierkanal mit einer mehrfach umgelenkten Kanalstruktur (DK, DKS, DK6), und mit zwei Öffnungen als ein Kanaleinlass (EO, ES, EO6) und ein Kanalauslass (VK, AS, VK6), **dadurch gekennzeichnet, dass** wenigstens eine der beiden Öffnungen relativ zu der Kanalstruktur in Richtung der Längserstreckung des Dosierkanals durch den Benutzer veränderlich positionierbar ist.

2. Vorrichtung nach Anspruch 1, **dadurch gekennzeichnet, dass** der Dosierkanal (DK, DKS, DK6) in Längserstreckung gekrümmt verläuft.

3. Vorrichtung nach Anspruch 1, **dadurch gekennzeichnet, dass** eine Wand des Dosierkanals durch eine relativ zu der übrigen Kanalstruktur verlagerbare erste Wandfläche (WF, FF) gebildet ist.

4. Vorrichtung nach Anspruch 3, **dadurch gekennzeichnet, dass** die veränderlich positionierbare Öffnung (EO, VK6) als Aussparung in der Wandfläche (WF, FF) ausgebildet ist.

5. Vorrichtung nach einem der Ansprüche 1 bis 4, **dadurch gekennzeichnet, dass** die Kanalstruktur (DK, DK6) als Vertiefung in einer zweiten Wandfläche (KW, DF) ausgebildet ist.

6. Vorrichtung nach Anspruch 5, **dadurch gekennzeichnet, dass** erste und zweite Wandfläche (WF und KW, FF und DF) aneinander anliegen und gleitend relativ zueinander verlagerbar sind.

7. Vorrichtung nach einem der Ansprüche 1 bis 6, **dadurch gekennzeichnet, dass** der Dosierkanal (DK) an einem Grundkörper (GK1, GK2) und die positionsveränderliche Öffnung (EO) an einem relativ zum Grundkörper verlagerbaren Stellelement (SE) oder der Dosierkanal (DK6) an dem Stellelement (SE6) und die Öffnung (VK6) an dem Grundkörper (GK62) ausgebildet ist.

8. Vorrichtung nach Anspruch 7, **dadurch gekennzeichnet, dass** das Stellelement (SE, SE6) um eine Drehachse (DA) relativ zu dem Grundkörper (GK1 und GK2, GK61, und GK62) drehbar ist.

9. Vorrichtung nach einem der Ansprüche 3 bis 8, **dadurch gekennzeichnet, dass** zumindest die erste Wandfläche als eine bezüglich der Drehachse kreiszylindrische Fläche ausgebildet ist.

10. Vorrichtung nach einem der Ansprüche 3 bis 9, **dadurch gekennzeichnet, dass** zumindest die erste Wandfläche eine ebene oder konische Ringfläche um die Drehachse bildet.

11. Vorrichtung nach einem der Ansprüche 3 bis 10, **dadurch gekennzeichnet, dass** die Kanalstruktur und die erste Wandfläche durch den Wasserdruck aufeinander zu gedrückt sind.

12. Vorrichtung nach einem der Ansprüche 7 bis 11, **dadurch gekennzeichnet, dass** der Grundkörper zwei miteinander verbundene Teilkörper (GK1, GK2) enthält und in jedem der beiden Teilkörper eine Teilstruktur (DK1, DK2) der Kanalstruktur ausgebildet ist.

13. Vorrichtung nach einem der Ansprüche 1 bis 12, **dadurch gekennzeichnet, dass** der Dosierkanal (DKS) einen sich in Längserstreckung erweiternden Querschnitt aufweist.

14. Vorrichtung nach einem der Ansprüche 1 bis 13, **dadurch gekennzeichnet, dass** eine Einrichtung zur Kompensation von Druckschwankungen vorgesehen ist,

15. Vorrichtung nach Anspruch 14, **dadurch gekennzeichnet, dass** die Einrichtung zur Kompensation von Druckschwankungen eine flexible Membran (EM) zwischen einer in Strömungsrichtung vor dem Dosierkanal angeordneten Eingangskammer (EK) und einer in Strömungsrichtung nach dem Dosierkanal angeordneten Ausgangskammer (AK) enthält.

16. Vorrichtung nach einem der Ansprüche 1 bis 15, **dadurch gekennzeichnet, dass** die veränderlich positionierbare Öffnung (EO, VK6) eine im Querschnitt im wesentlichen gleichbleibende Öffnung zu dem Dosierkanal bildet.

17. Vorrichtung nach einem der Ansprüche 1 bis 16, **dadurch gekennzeichnet, dass** die veränderlich positionierbare Öffnung eine Öffnung des Dosierkanals (DKS) mit einseitig variabler Begrenzung (BK) bildet.
